# EUROPEAN PATENT SPECIFICATION

(11) **EP 2 247 837 B1**
(45) Date of publication and mention of the grant of the patent: **13.01.2016**
(21) Application number: 09717716.6
(22) Date of filing: 16.02.2009
(51) Int. Cl.: F02B 19/08, F02B 19/10

(54) **PRE-CHAMBER ARRANGEMENT**
VORKAMMERANORDNUNG
AGENCEMENT DE PRÉCHAMBRE

(30) Priority: 03.03.2008 FI 20085199
(43) Date of publication of application: 10.11.2010
(73) Proprietor: Wärtsilä Finland Oy, 65380 Vaasa (FI)
(72) Inventor: SILLANPÄÄ, Hannu, FI-65280 Vaasa (FI); HATTAR, Christer, FI-VASA Fi-65300 (FI); CAFARI, Alberto, IT-34018 Trieste (IT); BIANCHI, Giuseppe, IT-34018 Trieste (IT); ZERNETTI, Gianpaolo, IT-34018 Trieste (IT); TREMULI, Paolo, IT-34018 Trieste (IT)
(74) Representative: Berggren Oy Ab
(86) International application number: PCT/FI2009/050124
(87) International publication number: WO 2009/109694

(56) References cited:
- EP-A- 0 480 545
- EP-A- 1 357 273
- JP-A- 2006 009 701
- US-A- 5 293 851

## Description

### Technical field

The invention relates to a pre-chamber arrangement for a cylinder of an internal combustion engine fitted for premixed combustion (Otto cycle) according to preamble of claim 1, the pre-chamber arrangement including a first chamber for mixing and igniting of the fuel and a second chamber of substantially smaller volume for communication between the first chamber and the main combustion chamber of the cylinder, the first chamber being provided with pilot injection means and having a chamber top substantially opposite to the second chamber.

### Background art

Pre-chambers are utilised especially in so called lean burn engines where a powerful ignition source is needed. In this case a pre-chamber is used to provide a higher energy for igniting the lean gas mixture in the main combustion chamber. In the pre-chamber the lean basic air/gas mixture coming from the main chamber can be ignited either by the injection of a proper fuel, reactive in excess of air and self igniting beyond certain pressure and temperature conditions, or by means of a glow plug or a spark plug, combined with a local stoichiometric air/gas mixture that might be obtained adding the proper amount of gas directly in the pre-chamber. The shape of the pre-chamber is dependent on the actual method of ignition. Pilot fuel ignition with or without glow plug can provide higher ignition energy than a conventional spark pre-chamber ignition system. The requirements are generally fast and repeatable mixing of the basic air/gas fuel mixture introduced into the pre-chamber and of the pilot fuel to be injected. Although a number of pre-chamber arrangements are known, see for example US 0293051 they are not able to meet the requirements described above at the same time.

An object of the invention is to provide an improved pre-chamber arrangement suitable for lean burn engines utilising pilot injection principle, which assists in meeting the more and more strict requirements set for lean burn engines as to the emissions and efficiency thereof.

The objects of the invention can be met substantially as is disclosed in claim 1 and in the other claims describing more details of different embodiments of the invention.

### Disclosure of the invention

In accordance with the invention the first chamber has substantially oval shape with curved walls between the chamber top and the second chamber. The second chamber is substantially asymmetrically positioned with regard to the first chamber so as to provide a tumble flow motion in the first chamber for the gaseous fuel pressed from the main combustion chamber and guided by the curved wall of the first chamber towards and past the fuel of pilot injection means to be ignited.

By means of the invention an efficient circulation and fast mixing of the fuel gas with the pilot fuel injected is accomplished. The provision and making use of tumble flow motion of the mixture results in repeatable and powerful combustion both in the pre-chamber as well as in the main combustion chamber, which for its part results in higher engine efficiency and increased combustion stability. The result is also lesser harmful emissions relative to the output of the engine.

The result can be improved if the first chamber has asymmetric shape so that it is slightly shifted relative to the central longitudinal axis of the first chamber towards the side of the second chamber. In practice the inner wall at the equatorial region of the first chamber at the side of the second chamber has with advantage a smaller radius of curvature than the wall at the opposite side of the first chamber. So the inner wall at the equatorial region of the first chamber at the side of the second chamber should be properly curved and connected to the wall of the second chamber with a good tangential radius.

Further the pilot injection means is asymmetrically located with regard to the central longitudinal axis of the first chamber at one end thereof. This is useful to achieve a fuel injection orientation towards the most proper volume zone of the first chamber for a fast and repeatable mixing and combustion.

The arrangement may further be provided with separate igniting means, preferably in the form of a glow plug, which is located on the other side of the central longitudinal axis of the first chamber opposite to the pilot injection means. This is useful especially when the engine is still cold in order to provide a reliable pre-chamber ignition. Depending on the circumstances the separate igniting means may with advantage serve as support igniting means only.

Advantageously the second chamber is provided with a number of nozzle holes at the part facing the main combustion chamber. In practice then the second chamber is arranged so that said nozzle holes are symmetrically arranged with regard to the main combustion chamber so as to ensure efficient burning also in the main combustion chamber of the cylinder.

The second chamber is with advantage purposely long enough to channel the air/gas mixture coming from the main chamber to the first chamber. Further the intersection of the two chambers has to have wide radius in order to reduce the risk of hot spot zone yielding unwanted uncontrolled self ignition of the air/gas mixture. The dimensions of the second chamber should be selected so as to ensure both a sufficient flow velocity of the incoming air/gas mixture during the compression stroke and low pressure drop during the first chamber flame front propagation towards the main combustion chamber. The second chamber tilting angle with regard to the first chamber should be selected so that the second chamber ends in correspondence with the central axis of the main combustion chamber in order to realize the symmetric arrangement of the nozzle holes in the main combustion chamber.

In a favourable embodiment of the invention the ratio (Volume first chamber) / (Total area nozzle holes taken in cross-section) is selected between 300 mm and 800 mm.

The inclination angle between the central longitudinal axes of the first chamber and the second chamber is with advantage between 10 to 50 degrees.

As regards the substantially oval general form of the first chamber it is preferably dimensioned such that the ratio (central longitudinal axis) / (central transverse axis) is from 0,6 to 1,8. Hereby most favourable results for accomplishing efficient tumble flow motion within the first chamber can be ensured when a substantially oval basic form is utilised. In this connection the substantially oval shape can be construed to include also generally the shapes of eggs.

### Brief Description of Drawings

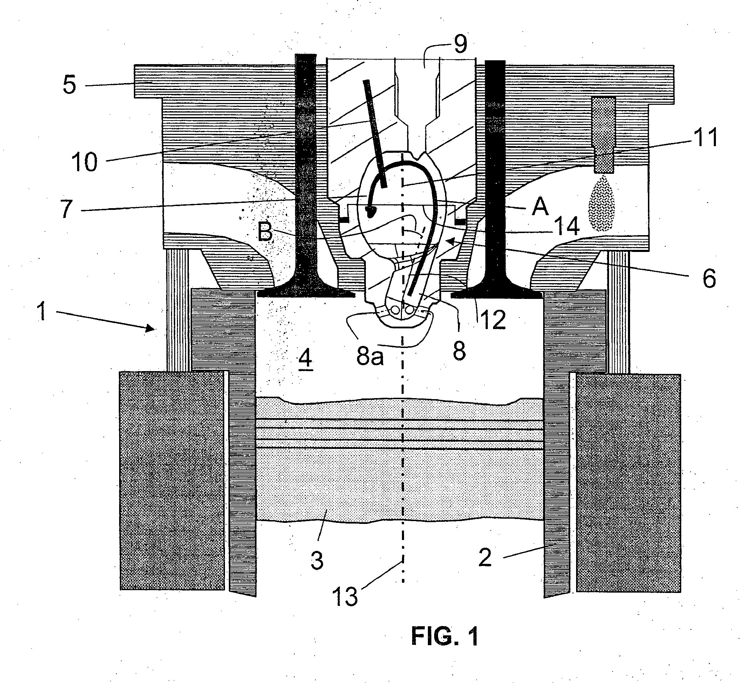

In the following the invention is described with reference to the accompanying drawing, the only figure of which shows, as a way of example only, an ernbodiment of a pre-chamber arrangement according to the invention in section.

### Detailed Description of Drawings

In the drawing reference numeral 1 indicates a cylinder of a lean burn internal combustion engine, including a cylinder liner 2, a reciprocating piston 3 and a main combustion chamber 4. The main combustion chamber 4 is also bounded by a cylinder head 5 with inlet and outlet ducts and valves in a conventional way. The cylinder head 5 is additionally provided with a pre-chamber arrangement 6 including a first chamber 7 and a second chamber 8. The first chamber 7 is provided with injection means 9 for providing pilot injection and, optionally, a glow plug 10. The part of the second chamber 8 facing the main combustion chamber 4 is provided with a number of nozzle holes 8a preferably symmetrically arranged with regard to the main combustion chamber 4.

As can be seen from the figure in accordance with the invention the first chamber 7 of the pre-chamber arrangement 6 is substantially oval shaped with smooth curved walls. It is in communication with the main combustion chamber 4 through the second chamber 8 having essentially a proper length to guide in a rapid and forced way the flow fuel/air mixture from the main combustion chamber 4 and being arranged asymmetrically with regard to the first chamber 7. In addition the second chamber 8 is arranged in tilted position in accordance with the design needs coming from the whole cylinder head 5 layout arrangement. The flow motion coming from the second chamber 8 is further guided by the upper part of the oval shape of the first chamber 7. For this purpose the pilot injection means 9 protrude into the first chamber as little as possible. Hereby a tumble flow motion indicated by arrow A is provided resulting in fast and repeatable pre-chamber combustion affected by means of the pilot injection, whereby the mixture is moved further into the main combustion chamber 4 guided by the second chamber 8 and the nozzle holes 8a in the second chamber.

The angle B between the central longitudinal axis 11 of the first chamber 7 and the central longitudinal axis 12 of the second chamber 8 is with advantage selected within the range of 10 - 50 degrees. In practice the angle to be selected is dependent on the dimensions and tilting of the second chamber 8 so that the nozzle holes 8a may coincide with the longitudinal central axis 13 of the main combustion chamber 4. Hereby symmetrical arrangement of the nozzle holes 8a with regard to the main combustion chamber 4 is ensured.

The volume of the first chamber 7 is dependent on the piston diameter and should be selected accordingly in each case. The other dimensions and proportions of the pre-chamber arrangement can then be applied to engines of different piston diameter in accordance with certain ratios.

As regards the dimensions of the substantially oval form or egg form of the first chamber 7 when the configuration is theoretically completed at the end facing the second chamber 8 the ratio of the central longitudinal axis 11 and the central transverse axis 14 is with advantage from 0,6 to 1,8.

Depending on the circumstances in each case, i.e. the fuels used and air mixing, the pressure, the temperature etc., the glow plug 10 may be utilised also continuously according to need so as to ensure proper pre-chamber combustion and operation of the engine.

It is clear that the invention is not limited to the examples and embodiments described but several modifications are feasible within the scope of the inventive idea of the attached claims.

## Claims

1. A pre-chamber arrangement for a cylinder (1) of an internal combustion engine fitted for premixed combustion (Otto cycle), the pre-chamber arrangement including a first chamber (7) for mixing and igniting of the fuel and a second chamber (3) of substantially smaller volume for communication between the first chamber (7) and the main combustion chamber (4) of the cylinder (1), the first chamber (7) being provided with pilot injection means (9) and having a chamber top substantially opposite to the second chamber (8), the first chamber (7) has substantially oval shape with curved walls between the chamber top and the second chamber (8), and the second chamber (8) is asymmetrically positioned in a tilting angle with regard to the first chamber (7) so as to provide a tumble flow motion (A) in the first chamber (7) for the gaseous fuel pressed from the main combustion chamber (4) and guided by the curved wall of the first chamber (7) towards and past the fuel of pilot injection means (9) to be ignited, **characterised in that** the second chamber (8) is positioned so as to end in correspondence with the central axis (13) of the main combustion chamber (4) and is provided with a number of nozzle holes (8a) at the part facing the main combustion chamber (4), that the ratio (Volume first chamber (7)) / (Total area nozzle holes (8a) taken in cross-section) is selected between 300mn and 800mm, that the angle (B) between the central longitudinal axes (11;12) of the first chamber (7) and the second chamber (8) is between 10 to 50 degrees, and that the first chamber (7) is dimensioned such that the ratio (central longitudinal axis (11)) / (central transverse axis (14)) is from 0,6 to 1,8.

2. A pre-chamber arrangement according to claim 1, **characterised in that** the first chamber (7) has asymmetric shape so that it is slightly shifted relative to the central longitudinal axis (11) of the first chamber (7) towards the side of the second chamber (8).

3. A pre-chamber arrangement according to claims 1 or 2, **characterised in that** the inner wall at the equatorial region of the first chamber (7) at the side of the second chamber (8) has smaller radius of curvature than the wall at the opposite side of the first chamber (7).

4. A pre-chamber arrangement according to any one of the preceding claims, **characterized in that** the pilot injection means (9) is symmetrically located with regard to the central longitudinal axis (11) of the first chamber (7) at one end thereof.

5. A pre-chamber arrangement according to claim 4, **characterised in that** the arrangement is provided with separate igniting means (10), preferably in the form of a glow plug, which is located on the other side of the central longitudinal axis (11) of the first chamber (7) opposite to the pilot injection means (9).

6. A pre-chamber arrangement according to claim 1, **characterised in that** the second chamber (8) is arranged so that said nozzle holes (8a) are symmetrically arranged with regard to the main combustion chamber (4).

## Patentansprüche

1. Vorkammeranordnung für einen Zylinder (1) eines Verbrennungsmotors, der für die Vormischverbrennung (Ottoverfahren) ausgestattet ist, wobei die Vorkammeranordnung eine erste Kammer (7) zum Mischen und Entzünden des Kraftstoffes und eine zweite Kammer (8) mit einem wesentlich kleineren Volumen als Verbindung zwischen der ersten Kammer (7) und der Hauptverbrennungskammer (4) des Zylinders (1) beinhaltet, wobei die erste Kammer (7) mit einem Voreinspritzungsmittel (9) versehen ist und eine Kammeroberseite im Wesentlichen gegenüber der zweiten Kammer (8) aufweist; wobei die erste Kammer (7) eine im Wesentlichen ovale Form mit gekrümmten Wänden zwischen der Kammeroberseite und der zweiten Kammer (8) aufweist und die zweite Kammer (8) asymmetrisch in einem Neigungswinkel in Bezug auf die erste Kammer (7) positioniert ist, um eine Taumelfließbewegung (A) in der ersten Kammer (7) für den gasförmigen Kraftstoff bereitzustellen, der aus der Hauptverbrennungskammer (4) gepresst und durch die gekrümmte Wand der ersten Kammer (7) in Richtung des zu entzündenden Kraftstoffes des Voreinspritzungsmittels (9) und daran vorbei geführt wird, **dadurch gekennzeichnet, dass** die zweite Kammer (8) derart positioniert ist, dass sie in Übereinstimmung mit der Mittelachse (13) der Hauptverbrennungskammer (4) endet und mit einer Reihe von Düsenlöchern (8a) an dem Teil versehen ist, welcher der Hauptverbrennungskammer (4) zugewandt ist, dass das Verhältnis (Volumen erste Kammer (7)) / (Gesamtfläche Düsenlöcher (8a) im Querschnitt) zwischen 300 mm und 800 mm ausgewählt ist, dass der Winkel (B) zwischen den zentralen Längsachsen (11; 12) der ersten Kammer (7) und der zweiten Kammer (8) zwischen 10 und 50 Grad liegt, und dass die erste Kammer (7) derart dimensioniert ist, dass das Verhältnis (zentrale Längsachse (11)) / (zentrale Querachse (14)) zwischen 0,6 und 1,8 liegt.

2. Vorkammeranordnung nach Anspruch 1, **dadurch gekennzeichnet, dass** die erste Kammer (7) eine asymmetrische Form aufweist, sodass sie relativ zu der zentralen Längsachse (11) der ersten Kammer (7) leicht in Richtung der Seite der zweiten Kammer (8) verschoben ist.

3. Vorkammeranordnung nach Anspruch 1 oder 2, **dadurch gekennzeichnet, dass** die Innenwand an der äquatorialen Region der ersten Kammer (7) an der Seite der zweiten Kammer (8) einen kleineren Krümmungsradius als die Wand an der gegenüberliegenden Seite der ersten Kammer (7) aufweist.

4. Vorkammeranordnung nach einem der vorhergehenden Ansprüche, **dadurch gekennzeichnet, dass** das Voreinspritzungsmittel (9) asymmetrisch in Bezug auf die zentrale Längsachse (11) der ersten Kammer (7) an einem Ende davon positioniert ist.

5. Vorkammeranordnung nach Anspruch 4, **dadurch gekennzeichnet, dass** die Anordnung mit einem separaten Entzündungsmittel (10) versehen ist, vorzugsweise in Form einer Glühkerze, welches sich auf der anderen Seite der zentralen Längsachse (11) der ersten Kammer (7) gegenüber dem Voreinspritzungsmittel (9) befindet.

6. Vorkammeranordnung nach Anspruch 1, **dadurch gekennzeichnet, dass** die zweite Kammer (8) derart angeordnet ist, dass die Düsenlöcher (8a) in Bezug auf die Hauptverbrennungskammer (4) symmetrisch angeordnet sind.

## Revendications

1. Agencement de préchambre pour un cylindre (1) d'un moteur à combustion interne adapté pour une combustion pré-mélangée (cycle Otto), l'agencement de préchambre comprenant une première chambre (7) pour mélanger et allumer le carburant et une deuxième chambre (8) d'un volume sensiblement plus petit pour la communication entre la première chambre (7) et la chambre de combustion principale (4) du cylindre (1), la première chambre (7) étant munie d'un moyen d'injection pilote (9) et ayant un haut de chambre sensiblement opposé à la deuxième chambre (8), la première chambre (7) ayant une forme sensiblement ovale avec des parois incurvées entre le haut de la chambre et la deuxième chambre (8), et la deuxième chambre (8) étant positionnée de manière asymétrique selon un angle d'inclinaison par rapport à la première chambre (7) de manière à fournir un mouvement d'écoulement de tourbillonnement (A) dans la première chambre (7) pour le carburant gazeux comprimé à partir de la chambre de combustion principale (4) et guidé par la paroi incurvée de la première chambre (7) vers le carburant du moyen d'injection pilote (9) à allumer et en passant à côté de celui-ci, **caractérisé en ce que** la deuxième chambre (8) est positionnée de manière à se terminer en correspondance avec l'axe central (13) de la chambre de combustion principale (4) et est munie d'un certain nombre de trous de buses (8a) au niveau de la partie faisant face à la chambre de combustion principale (4), **en ce que** le rapport (volume de la première chambre (7)) / (superficie totale des trous de buses (8a) en coupe transversale) soit sélectionné entre 300 mm et 800 mm, **en ce que** l'angle (B) entre l'axe longitudinal central (11 ; 12) de la première chambre (7) et de la deuxième chambre (8) est compris entre 10 à 50 degrés, et **en ce que** la première chambre (7) est dimensionnée de telle sorte que le rapport (axe longitudinal central (11)) / (axe transversal central (14)) va de 0,6 à 1,8.

2. Agencement de préchambre selon la revendication 1, **caractérisé en ce que** la première chambre (7) a une forme asymétrique de manière à être légèrement décalée par rapport à l'axe longitudinal central (11) de la première chambre (7) vers le côté de la deuxième chambre (8).

3. Agencement de préchambre selon les revendications 1 ou 2, **caractérisé en ce que** la paroi intérieure au niveau de la zone équatoriale de la première chambre (7) du côté de la deuxième chambre (8) a un rayon de courbure plus petit que la paroi du côté opposé de la première chambre (7).

4. Agencement de préchambre selon l'une quelconque des revendications précédentes, **caractérisé en ce que** le moyen d'injection pilote (9) est situé de manière asymétrique par rapport à l'axe longitudinal central (11) de la première chambre (7) au niveau de l'une des extrémités de celui-ci.

5. Agencement de préchambre selon la revendication 4, **caractérisé en ce que** l'agencement est muni d'un moyen d'allumage distinct (10), de préférence sous la forme d'une bougie de préchauffage qui est située de l'autre côté de l'axe longitudinal central (11) de la première chambre (7) en opposition au moyen d'injection pilote (9).

6. Agencement de préchambre selon la revendication 1, **caractérisé en ce que** la deuxième chambre (8) est disposée de telle sorte que lesdits trous de buse (8a) soient disposés symétriquement par rapport à la chambre de combustion principale (4).
